Europäisches Patentamt

European Patent Office

Office européen des brevets

(11) Publication number: **0 282 744**
**A2**

## (12) EUROPEAN PATENT APPLICATION

(21) Application number: **88102182.8**

(22) Date of filing: **15.02.88**

(51) Int. Cl.⁴: **G11B 11/10**

(30) Priority: **16.03.87 JP 58828/87**

(43) Date of publication of application:
**21.09.88 Bulletin 88/38**

(84) Designated Contracting States:
**DE FR GB**

(71) Applicant: **HITACHI, LTD.**
**6, Kanda Surugadai 4-chome**
**Chiyoda-ku Tokyo 101(JP)**

Applicant: **Hitachi Maxell Ltd.**
**No 1-1-88, Ushitora Ibaraki-shi**
**Osaka-fu(JP)**

(72) Inventor: **Niihara, Toshio**
**6-5, Fujimi-2-chome**
**Sayama-shi(JP)**
Inventor: **Ito, Masaru**
**759-15, Aihara**
**Sagamihara-shi(JP)**
Inventor: **Shigematsu, Kazuo**
**1-12, Takahisa Yoshikawamachi**
**Kitakatsushika-gun Saitama-ken(JP)**
Inventor: **Kaku, Toshimitsu**
**16-84, Nishihashimoto-1-chome**
**Sagamihara-shi(JP)**
Inventor: **Taii, Toshiaki Hitachi Makuseru**
**Shihoryo**
**1468-5, Aza Sanoyoshi Oaza Furumagi**
**Ishigemachi Yuki-gun Ibaraki-ken(JP)**
Inventor: **Ohta, Norio**
**306-462, Oaza Shinko**
**Iruma-shi(JP)**
Inventor: **Yoshihiro, Masafumi Hitachi**
**Makuseru Shioryo**
**1468-5, Aza Sanoyoshi Oaza Furumagi**
**Ishigemachi Yuki-gun Ibaraki-ken(JP)**

(74) Representative: **Patentanwälte Beetz sen. -**
**Beetz jun. Timpe - Siegfried -**
**Schmitt-Fumian**
**Steinsdorfstrasse 10**
**D-8000 München 22(DE)**

(54) **Magneto-optical disk.**

(57) A magneto-optical disk comprises at least a transparent substrate (1) having V-shaped grooves (6) formed therein, a transparent film (3) having a greater refractive index than that of the transparent substrate and a magnetic film (4). Information is recorded between adjacent ones of the V-shaped grooves (6). The V-shaped groove (6) has a depth shallower than λ/6 and deeper than λ/8 where λ represents wave length of laser light with which the magneto-optical disk is irradiated. Optimal tracking signal can be obtained without lowering the push-pull signal intensity for the tracking.

## FIG. 1

## MAGNETO-OPTICAL DISK

### BACKGROUND OF THE INVENTION

The present invention relates in general to an optical recording medium. More particularly, the invention is concerned with a magneto-optical disk capable of being recorded with a laser beam.

The magneto-optical disk which can be recorded (written), reproduced (read-out) and/or erased with a laser beam promises extensive use as a mass storage file memory in the future. In the magneto-optical disk of this sort, grooves are pre-formed in a disk substrate as the aid for holding a light beam spot at a proper position on the disk. Typical shapes of the pre-formed groove are disclosed in Japanese Patent Application Laid-Open No. 13458/1986 (JP-A-61-13458) and others. When compared with the U-shaped grooves, the V-shaped grooves are more advantageous in that the edges of the groove can be realized more smoothly, whereby positive protection can be assured against the likelihood of cleavage occurring in a transparent film and a magnetic film formed over the grooves. Besides, when the groove of V-shape is adopted, a high-quality read-out signal with high S/N ratio can be made available because of capability of recording information or data on plane land (hereinafter referred to as inter-groove land or simply as land) extending between the adjacent grooves, as is disclosed in JP-A-61-13458. In connection with the V-shaped groove, it is also reported that the maximum degree of modulation of a tracking signal can be attained with the groove depth in a range of $\lambda/6$ to $\lambda/5$. Reference may be made to the Extended Abstracts in The 33th Spring Meeting (1986) of The Japan Society of Applied Physics and Related Societies, 2a-H-3 (p. 106), wherein "groove depth" means the distance measured vertically from the level of the land to the bottom of V-shaped groove, and $\lambda$ represents the wavelength of the laser beam projected onto the magneto-optical disk.

It is however noted that since the recording film was formed directly on the groove in the prior art magneto-optical disk mentioned above, the optimum groove depth is determined by taking into consideration only the refractive index of the substrate. In other words, the optimum groove depth has heretofore been utterly put aside from consideration in the magneto-optical disk in which a transparent film having a greater refractive index than that of a substrate is first formed and a recording film is subsequently formed on the transparent film. In reality, with the layered structure of the groove having the groove depth on the order of $\lambda/5$, it has been found that intensity of the push-pull signal for tracking is low when compared with the disk in which the recording film is formed directly on the groove, thus giving rise to a problem.

### SUMMARY OF THE INVENTION

An object of the present invention is to provide a magneto-optical disk in which a transparent film having a greater refractive index than that of a disk substrate is provided between the substrate and a recording film and in which disk grooves are formed in such a depth which can assure an optimum tracking signal intensity.

The above object can be achieved by forming the V-shaped grooves with the groove depth shallower than $\lambda/6$ but deeper than $\lambda/8$ as compared with the groove depth in the range of $\lambda/6$ to $\lambda/5$ in the hitherto known magneto-optical disk.

By making the depth of the V-shaped grooves shallower than $\lambda/6$ and deeper than $\lambda/8$, optical groove depth determined in consideration of difference in the refractive index between substrate and the transparent film having a greater refractive index than the former coincides approximately with the groove depth proposed heretofore, whereby the optimum tracking signal intensity can be obtained.

### BRIEF DESCRIPTION OF THE DRAWINGS

Fig. 1 is a perspective view of a small piece cut out from a magneto-optical disk according to an embodiment of the present invention;

Fig. 2 is a view for illustrating graphically the effects attained with the magneto-optical disk according to the invention; and

Fig. 3 is a top plan view of a magneto-optical disk according to an embodiment of the invention.

### DESCRIPTION OF THE PREFERRED EMBODIMENTS

Now, the invention will be described in detail in conjunction with an exemplary and preferred embodiment thereof by referring to the accompanying drawings.

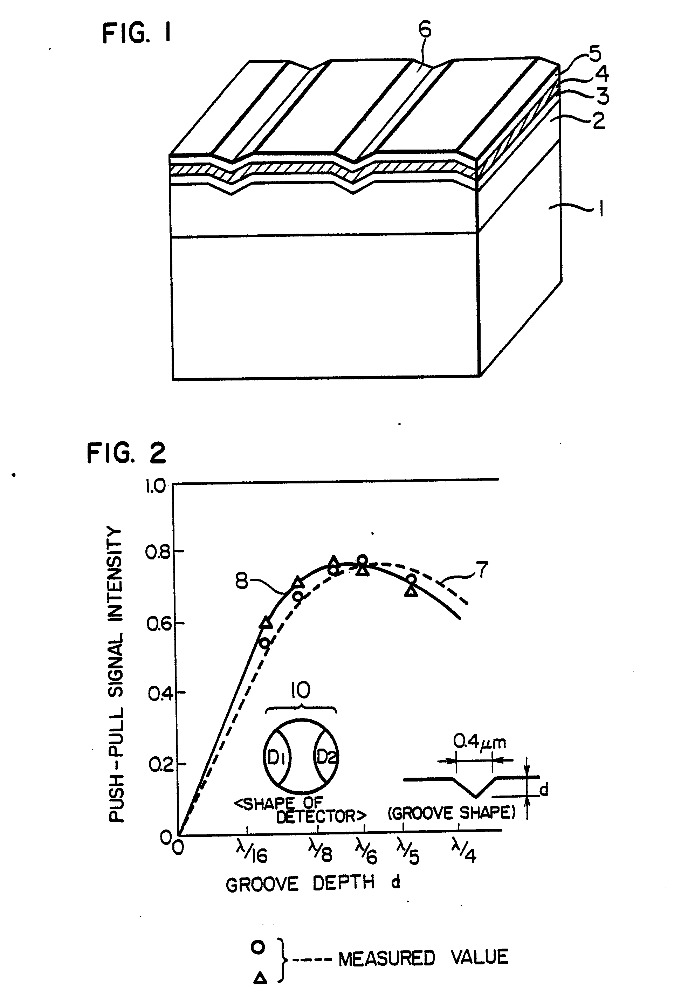

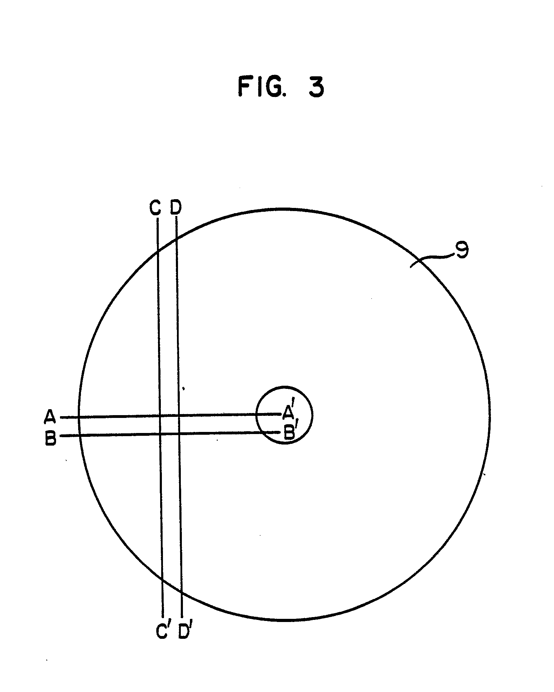

Fig. 3 is a top plan view of a magneto-optical disk 9 according to an embodiment of the present invention. The substrate 1 of the disk 9 is formed of glass and has a diameter of 130 mm. A center hole of 15 mm in diameter is formed at the center of the disk 9. A fragment cut out from the disk

along lines A - A', B - B', C - C' and D - D' indicated in Fig. 3 is shown in a perspective view in Fig. 1 on an enlarged scale. As will be seen in Fig. 1, an ultra-violet light curing resin layer 2 for forming V-shaped grooves 6 each having a width of 0.4 $\mu$m and a depth of $\lambda/7$ is formed in a thickness of 30 $\mu$m through a common 2p process (photopolymerization process). The substrate 1 having the ultra-violet light curing resin layer 2 formed thereon (this substrate is herein referred to as replica) is heated in vacuum, being followed by degas treatment for removing gases (mainly $H_2O$) confined within the ultra-violet light curing resin. For preventing the shape of grooves from being deformed, the heating temperature is set at 100 °C. The replica undergone the degas process is placed in a sputtering apparatus which is then evacuated to a vacuum level of $5 \times 10^{-7}$ Torr, whereupon a $Si_3N_4$-target is sputtered to form a silicon nitride film 3 having the refractive index of 2.07 in a thickness of 850 Å. This film thickness is most effective for increasing the Kerr rotation angle of the magnetic film by making use of interference in the silicon nitride film 3, as described hereinafter. Subsequently, the $Si_3N_4$-target is replaced by a composite target of Tb-Fe-Co-Nb without destroying the evacuated state and a four-element amorphous magnetic film 4 of TbFeCoNb series is formed over the silicon nitride film 3 in a thickness of 1000 Å. Finally, a nitride silicon film 5 is layered over the magnetic film 4 in a thickness of 3000 Å by using the silicon nitride target mentioned above without destroying the vacuum for the purpose of protecting the magnetic layer 4 against oxidation and corrosion which would otherwise occur due to the exposure to the atmosphere.

The magneto-optical disk thus manufactured and having the V-shaped grooves formed therein (shown in Fig. 1 or 3) was irradiated with a laser beam by using an optical head including a laser diode having a wave-length of 0.83 $\mu$m and an objective lens having a numerical aperture of 0.6, and a push-pull signal was detected by means of a ball-shaped optical detector. Measurement of the push-pull signal intensity for tracking the groove of the depth d in the magneto-optical disk resulted in such data as illustrated in Fig. 2. In this case, the push-pull signal intensity is defined to be the ratio of differential output $D_1 - D_2$ to the sum output $(D_1 + D_2)$ produced by two optical detector elements $D_1$ and $D_2$ incorporated in the ball-shaped optical detector 10 shown in Fig. 2. The results of calculation of the push-pull signal density are represented by solid and broken line curves, while the results of measurement are indicated by small circles and triangular marks in Fig. 2. In Fig. 2, a broken line curve shows the relation between the push-pull signal intensity and the groove depth when there is not a high refractive index film and the solid line curve 8 shows the relation between the push-pull signal intensity and the groove depth when there is a high refractive index film. The groove depth d was measured by a method referred to as diffraction method which is disclosed in JP-A-57-187604. As will be seen in Fig. 2, the calculated values well coincide with the measured values. It will thus be understood that the groove depth should be selected shallower than $\lambda/6$ and deeper than $\lambda/8$ in order to attain the maximum push-pull signal intensity. In that case, the groove depth is made shallower about 5 % than that of the hitherto known magneto-optical disk, whereby a much stabilized tracking operation can be assured. In order that the optical head can make access to the magneto-optical disk according to a cross-track-count method, the level signal for causing the optical head to traverse the grooves can be increased because of the shallower groove depth as compared with the hitherto known disk, whereby the cross track count operation can be carried out stably.

The effects described above are not restrictively attributable to the fact the film provided between the substrate 1 and the magnetic film 4 is constituted by the silicon nitride film 3. Taking into account that the refractive index of the silicon nitride film is ordinarily about 2, the advantageous effects described above can be attained with any transparent film having the comparable refractive index, i.e. approximately in the range of 1.90 to 2.14. Transparent dielectric films such as, for example, silicon monoxide, aluminum nitride and the like are suited to this end. Further, such compositions of the abovementioned dielectric films in which silicon and aluminum are present, respectively, in excess when compared with the respective inherent compositions may be equally employed. Taking silicon nitride as an example, the film having composition of $Si_3N_4$ is usually employed, which may be however added with a small amount of silicon. By way of example, a film of $(Si_3N_4)_{0.98}Si_{0.02}$ resulting from addition of 2 mol.% of silicon to silicon nitride may be employed, so far as the refractive index thereof lies within the range described above. For increasing effectively the Kerr rotation angle, the thickness of the transparent film should be preferably in a range of 600 to 1000 Å and more preferably in a range of 750 to 900 Å. Further, the material for the substrate of the magneto-optical disk according to the invention is never restricted to glass. There can be equally employed an injection-molded substrate of acryl resin, polycarbonate resin or the like, or light-cured substrate formed and cured through irradiation with ultra-violet light or a cast-molded substrate formed of a thermosetting resin such as epoxy resin or the like. In this connection, it is however noted that since the grooves are formed in the substrate itself, the ultra-violet light curing resin layer 2 can be spared.

Finally, it should be mentioned that the medium structure of the magneto-optical disk is not restricted to that shown in Figs. 1 and 3. By way of example, a transparent dielectric film (e.g. of silicon dioxide) which has the same refractive index as the substrate is formed on the ultra-violet light curing resin film, wherein the silicon nitride film 3 with high refractive index, the magnetic film 4 and the silicon nitride film 5 may be formed in a multi-layed structure on the abovementioned transparent dielectric film. A variety of different medium structures may be adopted without departing from the spirit and scope of the present invention.

As will now be appreciated from the foregoing description, it is possible according to the teachings of the present invention to implement a magneto-optical disk having a groove depth which can assure optimum push-pull signal for the tracking without lowering the push-pull signal intensity in the case where a film exhibiting a high refractive index is used for the purpose of increasing the Kerr rotation angle.

## Claims

1. A magneto-optical disk, comprising at least a transparent substrate (1) having V-shaped grooves (6) formed therein, a transparent film (3) having a greater refractive index than that of said transparent substrate and a magnetic film (4), wherein information is recorded between adjacent ones of said V-shaped grooves (6), and wherein said V-shaped groove (6) has a depth shallower than $\lambda/4$ and deeper than $\lambda/16$ wherein $\lambda$ represents the wave length of laser light with which said magneto-optical disk (9) is irradiated.

2. A magneto-optical disk, comprising at least a transparent substrate (1) having V-shaped grooves (6) formed therein, a transparent film (3) having a greater refractive index than that of said transparent substrate and a magnetic film (4), wherein information is recorded between adjacent ones of said V-shaped grooves (6), and wherein said V-shaped groove (6) has a depth shallower than $\lambda/6$ and deeper than $\lambda/8$ where $\lambda$ represents wave length of laser light with which said magneto-optical disk (9) is irradiated.

3. A magneto-optical disk according to claim 2, wherein said transparent film (3) is constituted by a dielectric film formed of one selected from a group consisting of aluminum nitride, silicon monoxide and silicon nitride containing silicon in excess over the inherent composition thereof, aluminum nitride containing aluminum in excess over the inherent composition thereof and silicon monoxide containing silicon in excess over the inherent composition thereof.

4. A magneto-optical disk according to claim 2, wherein said magnetic film (4) is constituted by an amorphous magnetic thin film of a rare earth-transition metal.

**FIG. 1**

**FIG. 2**

PUSH-PULL SIGNAL INTENSITY

GROOVE DEPTH d

10

$D_1$  $D_2$

<SHAPE OF DETECTOR>

0.4μm

(GROOVE SHAPE)

○ } ---- MEASURED VALUE
△ }

FIG. 3